# EUROPÄISCHE PATENTANMELDUNG

(11) **EP 1 393 877 A2**
(43) Veröffentlichungstag der Anmeldung: **03.03.2004**
(21) Anmeldenummer: 03018086.3
(22) Anmeldetag: 08.08.2003
(51) Int. Cl.: B29C 44/28, B29C 44/60

(54) **Verfahren und Anlage zur Herstellung von Schaumstoff in einem kontinuierlichen Blockschaumprozess**

(30) Priorität: 13.08.2002 DE 10237005
(71) Anmelder: Bayer MaterialScience AG, 51368 Leverkusen (DE)
(72) Erfinder: Ehbing, Hubert, Dr., 51519 Odenthal (DE); Zien, Holger, Dr., 51065 Köln (DE); Dörner, Karl-Heinz, 50259 Pulheim (DE); Beck, Christian, Dr., 51399 Burscheid-Hilgen (DE); Frei, Hans, 8645 Jona (CH)

(57) **Zusammenfassung**

Die Erfindung betrifft eine Anlage und ein Verfahren zur Herstellung von Schaumstoff in einem kontinuierlichem Blockschaumprozess mit folgenden Schritten:
- Erfassung von Ist-Steighöhen des Schaumstoffs entlang einer Förderrichtung,
- Bestimmung einer Stellgröße für den Blockschaumprozess in Abhängigkeit von einer Abweichung der Ist-Steighöhen von Soll-Steighöhen.

## Beschreibung

Die Erfindung betrifft ein Verfahren und eine Anlage zur Herstellung von Schaumstoff in einem kontinuierlichen Blockschaumprozess, insbesondere die Herstellung von Polyurethan-Schaumstoff.

Die Produktqualität von Schaumstoffen hängt von einer Vielzahl von Umgebungsparametern und Anlagenparametern ab. Dies gilt insbesondere für die Herstellung von Polyurethan-Schaum. Aus Shell Petrochemicals, No. 5, 1987, Seite 14, "An Expert Touch for PU Foam Production", Philip Connolly, ist ein mathematisches Modell für die Herstellung von Polyurethan-Schaum bekannt, in das einige dieser Parameter eingehen.

Aus Journal of CELLULAR PLASTICS, Januar / Februar 1983, "Felxible Polyurethane Slabstock Foam: The Influence of Formulation, Climatic Conditions and Storage Conditions on Foam Properties", Dr. R. Schiffauer und C. den Heijer, sind verschiedene der Parameter bekannt, die für die Herstellung von Polyurethan-Schaum von Bedeutung sind. Insbesondere kann die ausgeprägte Abhängigkeit des Herstellungsprozesses von Umweltbedingungen, wie zum Beispiel vom Luftdruck und der Luftfeuchtigkeit, zu einem Sommer-Winter-Effekt bei der Herstellung führen.

Zur Qualitätssicherung bei der Herstellung von Polyurethan-Schaum ist es an sich bekannt, die Eigenschaften der Ausgangsstoffe zu analysieren und auch das Endprodukt einer eingehenden Analyse zu unterziehen. Aus "Qualitätssicherung von PUR-Schaumstoffen, Prüfung des Steigverhaltens mit Ultraschall", B. Hofmann und J. Albertz, Kunststoffe 86 (1996), ist es an sich bekannt, das Steigverhalten der gemischten Ausgangsstoffe mittels Ultraschall-Sensoren zu ermitteln. Ein ähnliches Verfahren für die Qualitätskontrolle ist aus "Ultrasonics for foam measurements: a quality control tool for PU foams", Dr. Ing. Dirk Wehrhahn, Urethanes Technology, August / September 1991 bekannt. Hierbei wird die Puls-Echo-Methode für die Ultraschallmessung verwendet.

Ein weiteres Schaumhöhen-Messsystem auf der Basis einer Ultraschall-Abstandsmessung ist bekannt aus "Qualität gibt den Takt an", Kunststoffberater (1993), 38 (6), Seite 11. Aus "Use of a charged coupled device (CCD) camera for evanescent wave optical fiber cure monitoring of liquid composite molding resins", Polym. Compos. (1997) 18 (4), Seiten 518-525 ist ein alternatives Sensor-Prinzip basierend auf einer CCD Kamera bekannt. Aus der JP 103 29 160 ist ferner ein Sensor zur Messung der Expansion von Schaumstoff bekannt, der das Gewicht und die Dicke des Schaumstoffs bestimmt.

Ein Verfahren zur Charakterisierung des hergestellten Schaums ist aus "Non-desctructive characterization of microcellular foam structure. Error analysis of a proposed sensor", Annu. Tech. Conf. Soc. Plast. Eng. (1992), Seiten 1519-1526 bekannt.

Des weiteren sind auch schon verschiedene computergestützte Verfahren für die Qualitätssicherung bei der Herstellung von Polyurethan-Schaum bekannt geworden, wie zum Beispiel aus "Software to Manage a Continous Production of Flexible Polyurethane Foams by Slabstock Technology", Salvatore Consoli, Journal of CELLULAR PLASTICS, Volume 33, März 1997, Seite 102, "Foam Roadmap On-Line Answernostics", James D. Shoup, Polyurethane 1995, September 26-29, 1995, Seiten 489, 490 und "Mathematical Property Prediction Models for Flexible Polyurethane Foams", Reinhart Schiffauer, Adv. Urethane Sci. Techn. 14 (1998), Seiten 1 bis 44.

Aus "Experten mit System, Prozesssteuerung des PUR-RRIM-Verfahrens zur Herstellung von Karosserieaußenteilen", F. Schnabel, Sulzbach, K.-H. Dörner, Kunststoffe, 88. Jahrgang, 10/98 und "PUR-Teile kostengünstig fertigen, Stand der Polyurethan-RRIM-Technologie", Karl-Heinz Dörner, Hans Joachim Meiners, Hans-Joachim Ludwig, Kunststoffe, 91. Jahrgang, 4/2001 sind ferner Expertensysteme zur Verarbeitung von Prozessparametern bei der RIM-Verarbeitung bekannt. Diese Expertensysteme sollen Aussagen hinsichtlich der Produkteigenschaften, der Prozessüberwachung, der Qualitätssicherung und der vorbeugenden Instandhaltung treffen können.

Ferner sind aus dem Stand der Technik verschiedene Anlagentypen zur Herstellung von Polyurethan-Blockschaum und anderen Schaumstoffen bekannt. Solche Anlagen sind von der Firma Hennecke GmbH, Birlinghovener Straße 30, 53754 Sankt Augustin, Deutschland, (www.hennecke.com) kommerziell erhältlich, insbesondere Anlagen zur Herstellung von Blockweichschaumstoff in kontinuierlicher Produktion. Solche Anlagen werden auch als Blockschaumanlagen bezeichnet.

Weitere Prinzipien für Blockschaumanlagen sind die ebenfalls an sich aus dem Stand der Technik bekannten Planiblock, Draka-Petzetakis, Maxfoam, Vertifoam Edge Control (Kunststoffhandbuch; 7. Polyurethane; Hrsg. Oertel, G.; München; Wien; Hanser Verlag, 1993) und VPF-(Variable-Pressure-Foaming) Verfahren Anlagetypen. Auch bei diesen Anlagentypen wird Polyurethan-Weichschaum in einem kontinuierlichen Rechteck-Verfahren hergestellt.

Verschiedene Typen von Anlagen zur Herstellung von Polyurethan in einem kontinuierlichen Blockschaum-Prozess sind ferner von der Firma Cannon Viking, Manchester, England (www.cannonviking.com) kommerziell erhältlich.

Verschiedene Vorrichtungen für die kontinuierliche Herstellung von Polyurethan-Schaumstoffblöcken sind ferner aus der DE 691 19 244 T2, DE 692 17 671 T2 und aus der US 4,492,664 bekannt. Aus der DE 696 10 885 T2 ist ein weiteres Gerät zur Herstellung von Polyurethan-Schaumstoff bekannt.

Verschiedene Verfahren zur Herstellung von Polyurethan-Schaumstoffen auf solchen Anlagen zeigen beispielsweise die DE 381 99 40 A1, DE 196 49 829 A1, DE 431 5874 A1 und DE 195 06 671 C2.

Der Erfindung liegt die Aufgabe zu Grunde ein verbessertes Verfahren zur Herstellung von Schaumstoff in einem kontinuierlichen Blockschaum-Prozess und eine verbesserte Anlage zur Herstellung von Schaumstoff in einem solchen Prozess zu schaffen.

Die der Erfindung zu Grunde liegende Aufgabe wird mit den Merkmalen der unabhängigen Patentsprüche jeweils gelöst. Bevorzugte Ausführungsformen der Erfindung sind in den abhängigen Patentansprüchen angegeben.

Weiterhin ist ein bevorzugtes Verfahren ein solches, bei dem es sich bei dem kontinuierlichen Blockschaumprozess um ein Verfahren vom Typ Hennecke, Planiblock, Draka-Petzetakis, Maxfoam, Vertifoam ,VPF oder MegaFoam handelt.

Weiterhin ist ein bevorzugtes Verfahren ein solches, bei dem eine Fördervorrichtung mit einem Förderband, welches in die Förderrichtung angetrieben wird, verwendet wird.

Weiterhin ist ein bevorzugtes Verfahren ein solches, bei dem die Fördervorrichtung ein Fallbrett aufweist.

Weiterhin ist ein bevorzugtes Verfahren ein solches, bei dem die Ist-Steighöhen durch entlang der Förderrichtung angeordnete Höhensensoren erfasst werden.

Weiterhin ist ein bevorzugtes Verfahren ein solches, bei dem die Fördergeschwindigkeit als Stellgröße dient.

Weiterhin ist ein bevorzugtes Verfahren ein solches, bei dem die Einstellung des Fallbretts als Stellgröße dient.

Weiterhin ist ein bevorzugtes Verfahren ein solches, bei dem die pro Zeiteinheit dem Blockschaumprozess zugeführte Materialmenge als Stellgröße dient.

Weiterhin ist ein bevorzugtes Verfahren ein solches, bei dem die chemische Zusammensetzung des dem Blockschaumprozess zugeführten Materials als Stellgröße dient.

Weiterhin ist ein bevorzugtes Verfahren ein solches, bei dem die Temperatur des dem Blockschaumprozess zugeführten Materials als Stellgröße dient und die Temperatur vorzugsweise durch zumindest einen in den Zulaufleitungen zu dem Mischkopf angeordneten Durchlauferhitzer geregelt wird.

Weiterhin ist ein bevorzugtes Verfahren ein solches, bei dem der Abspritzdruck der Komponenten des Schaumstoffs in den Mischkopf als Stellgröße dient.

Weiterhin ist ein bevorzugtes Verfahren ein solches, bei dem der Druck in dem Mischkopf als Stellgröße dient, wobei der Druck in dem Mischkopf vorzugsweise über eine am Auslass des Mischkopfes befindliche Drossel geregelt wird.

Weiterhin ist ein bevorzugtes Verfahren ein solches, bei dem die Drehzahl eines Mischers für die Komponenten des Schaumstoffs als Stellgröße dient.

Weiterhin ist ein bevorzugtes Verfahren ein solches, bei dem die Menge des gelösten und/oder dispergierten Gases in den Komponenten des Schaumstoffs als Stellgröße dient.

Weiterhin ist ein bevorzugtes Verfahren ein solches, bei dem zumindest eine Produkteigenschaft in Bezug auf Schaumstoff, der sich in einem bestimmten Bereich entlang der Förderrichtung befindet, in Abhängigkeit von den Ist-Steighöhen prognostiziert wird.

Weiterhin ist ein bevorzugtes Verfahren ein solches, bei dem die Prognose der zumindest einen Produkteigenschaft mittels eines Regressionsmodells erfolgt.

Weiterhin ist ein bevorzugtes Verfahren ein solches, bei dem Prognose der zumindest einen Produkteigenschaft mittels eines neuronalen Netzes oder eines hybriden neuronalen Netzes erfolgt.

Weiterhin ist ein bevorzugtes Verfahren ein solches, bei dem dem neuronalen Netz zumindest die Ist-Steighöhen als Eingangsparameter eingegeben werden.

Weiterhin ist ein bevorzugtes Verfahren ein solches, bei dem die zumindest eine Produkteigenschaft zur Klassifizierung der Güte des Schaumstoffs verwendet wird.

Weiterhin ist ein bevorzugtes Verfahren ein solches, bei dem Bereiche des Schaumstoffblocks, die eine geringe Güte aufweisen, ausgeschnitten werden.

Weiterhin ist eine bevorzugte Anlage eine solche, bei der es sich bei dem Blockschaumprozess um ein Verfahren vom Typ Hennecke, Planiblock, Draka-Petzetakis, Maxfoam, Vertifoam , VPF oder MegaFoam handelt.

Weiterhin ist eine bevorzugte Anlage eine solche, mit einer Fördervorrichtung, die ein in eine Förderrichtung (2) antreibbares Förderband (1) aufweist.

Weiterhin ist eine bevorzugte Anlage eine solche, mit einem Fallbrett (39).

Weiterhin ist eine bevorzugte Anlage eine solche, bei der die Mittel zur Erfassung von Ist-Steighöhen entlang der Förderrichtung angeordnete Höhen-Sensoren aufweisen.

Weiterhin ist eine bevorzugte Anlage eine solche, bei der die Mittel zur Bestimmung einer Stellgröße zur Bestimmung der Fördergeschwindigkeit ausgebildet sind.

Weiterhin ist eine bevorzugte Anlage eine solche, bei der die Mittel zur Bestimmung einer Stellgröße zur Bestimmung einer Neigung des Fallbretts ausgebildet sind.

Weiterhin ist eine bevorzugte Anlage eine solche, bei der die Mittel zur Bestimmung der Stellgröße zur Bestimmung der pro Zeiteinheit zu dem Blockschaumprozess zuzuführenden Materialmenge ausgebildet sind.

Weiterhin ist eine bevorzugte Anlage eine solche, bei der die Mittel zur Bestimmung der Stellgröße zur Bestimmung der chemischen Zusammensetzung des dem Blockschaumprozess zuzuführenden Materials ausgebildet sind.

Weiterhin ist eine bevorzugte Anlage eine solche, bei der die Mittel zur Bestimmung der Stellgröße zur Bestimmung des Abspritzdrucks der Komponenten des Schaumstoffs in dem Mischkopf ausgebildet sind.

Weiterhin ist eine bevorzugte Anlage eine solche, bei der die Mittel zur Bestimmung der Stellgröße zur Bestimmung des Drucks in dem Mischkopf ausgebildet sind und der Druck in dem Mischkopf vorzugsweise über eine an einem Auslass des Mischkopfes befindliche Drossel regelbar ist.

Weiterhin ist eine bevorzugte Anlage eine solche, bei der die Mittel zur Bestimmung der Stellgröße zur Bestimmung der Drehzahl eines Mischers für die Komponenten des Schaumstoffs ausgebildet sind, wobei der Mischer vorzugsweise in dem Mischkopf angeordnet ist.

Weiterhin ist eine bevorzugte Anlage eine solche, bei der die Mittel zur Bestimmung der Stellgröße zur Bestimmung der Menge des gelösten und / oder dispergierten Gases der Komponenten des Schaumstoffs ausgebildet sind.

Weiterhin ist eine bevorzugte Anlage eine solche, bei der Mittel zur Bestimmung der Stellgröße zur Bestimmung der Temperatur des dem Blockschaumprozess zugeführten Materials ausgebildet sind, wobei vorzugsweise ein Durchlauferhitzer in den Zulaufleitungen zu dem Mischkopf zur Regelung der Temperatur vorgesehen ist.

Weiterhin ist eine bevorzugte Anlage eine solche, bei der mit Mitteln (36) zur Prognose von zumindest einer Produkteigenschaft von Schaumstoff, der sich an einer bestimmten Position entlang der Förderrichtung befindet, in Abhängigkeit von den Ist-Steighöhen.

Weiterhin ist eine bevorzugte Anlage eine solche, bei der die Mittel zur Prognose auf einem Regressionsmodell basieren.

Weiterhin ist eine bevorzugte Anlage eine solche, bei der die Mittel zur Prognose auf einem neuronalen Netz oder einem hybriden neuronalen Netz basieren.

Weiterhin ist eine bevorzugte Anlage eine solche, bei der mit Mitteln zur Steuerung einer Schneidvorrichtung zur Zerteilung des Schaumstoffs in Blöcke, die eine prognostizierte Produkteigenschaft aufweisen.

Die Erfindung erlaubt eine verbesserte Regelung der Herstellung von Schaumstoff in einem kontinuierlichem Blockschaumprozess durch Erfassung der Ist-Steighöhen an mehreren Stellen entlang des Expansionsbereiches des Schaumstoffs in der Anlage. Die Ist-Steighöhen werden mit entsprechenden Soll-Steighöhen verglichen. Aus einer eventuellen Abweichung der Ist- von den Soll-Steighöhen wird eine Stellgröße für die Nachregelung des Prozesses ermittelt.

Von besonderem Vorteil ist hierbei, dass während der laufenden Produktion des Schaumstoffs Anlagenparameter und/oder die Zusammensetzung des Ausgangsmaterials für den Schaumstoff nachgeregelt werden können, um so zu einer möglichst gleichbleibenden gewünschten Schaumstoffqualität zu kommen. Dadurch werden Schwankungen in Produkteigenschaften, wie zum Beispiel der Dichte und der Stauchhärte des Schaumstoffs, aufgrund von schwankenden Prozessparametern und Umweltbedingungen, wie zum Beispiel dem Luftdruck, reduziert. Dies hat den weiteren Vorteil, dass die für das Einfahren der Anlage benötigte Zeit und der Ausschuss reduziert werden.

Nach einer bevorzugten Ausführungsform der Erfindung erfolgt die Herstellung der Schaumstoffs in einer Anlage vom Typ Hennecke, Planiblock, Draka-Petzetakis, Maxfoam, Vertifoam, Edge Control und VPF. Solche Anlagen haben üblicherweise eine Fördervorrichtung, auf der der expandierende Schaumstoff in eine Förderrichtung bewegt wird. Zum Teil ist in dem Expansionsbereich des Schaumstoffs ein sogenanntes Fallbrett vorhanden.

Erfindungsgemäß werden in dem Expansionsbereich des Schaumstoffs entlang der Förderrichtung mehrere Höhensensoren angeordnet, um die Ist-Steighöhen an unterschiedlichen Stellen des Expansionsbereichs zu messen. Dabei können unterschiedliche Sensortypen zum Einsatz kommen, wie zum Beispiel Ultraschall-Sensoren, Lichtschranken, CCD-Cameras, kapazitive Sensoren, induktive Sensoren, Laser Messsysteme oder andere Sensoren, die eine Höhenmessung der Ist-Steighöhen erlauben.

Nach einer bevorzugten Ausführungsform der Erfindung wird durch die gemessenen Ist-Steighöhen eine Ausgleichskurve gelegt, die mit einer Soll-Kurve verglichen wird. Beispielsweise wird die Differenz der Steigungen der Kurven oder die Differenz der Integrale der Kurven in dem Expansionsbereich als Basis für die Bestimmung einer Stellgröße verwendet.

Nach einer bevorzugten Ausführungsform der Erfindung dient die Fördergeschwindigkeit des expandierenden Schaumstoffs als Stellgröße. Liegen beispielsweise die Ist-Steighöhen unter den Soll-Steighöhen, so wird die Fördergeschwindigkeit solange verringert, bis die Ist-Steighöhen hinreichend mit den Soll-Steighöhen übereinstimmen.

Nach einer weiteren bevorzugten Ausführungsform der Erfindung dient die pro Zeiteinheit dem Blockschaumprozess zugeführte Materialmenge als Stellgröße. Liegen beispielsweise die Ist-Steighöhen unter den Soll-Steighöhen, so wird die pro Zeiteinheit zugeführte Materialmenge solange erhöht, bis die Ist- und die Soll-Steighöhen hinreichend übereinstimmen.

Nach einer weiteren bevorzugten Ausführungsform der Erfindung dient die chemische Zusammensetzung des dem Blockschaumprozess zugeführten Materials als Stellgröße. Liegen beispielsweise die Ist-Steighöhen unter den Soll-Steighöhen, so wird die chemische Zusammensetzung so verändert, dass es zu einem schnelleren Aufschäumen des Schaumstoffs kommt.

Nach einer weiteren bevorzugten Ausführungsform der Erfindung werden aufgrund einer Abweichung der Ist- von den Soll-Steighöhen verschiedene Stellgrößen bestimmt, wie zum Beispiel eine Änderung der Fördergeschwindigkeit, der pro Zeiteinheit zugeführten Materialmenge und / oder der chemischen Zusammensetzung des zugeführten Materials.

Nach einer weiteren bevorzugten Ausführungsform der Erfindung wird aufgrund der Ist-Steighöhen zumindest eine Produkteigenschaft des resultierenden Schaumstoffs prognostiziert. Für diese Prognose kann ein rigoroses Regressionsmodell verwendet werden. Alternativ oder zusätzlich kann ein neuronales Netz oder ein hybrides neuronales Netz für die Prognose verwendet werden.

Nach einer bevorzugten Ausführungsform der Erfindung werden die Ist-Steighöhen, die chemische Zusammensetzung des zugeführten Materials sowie Anlagen und /oder Umweltparameter dem neuronalen Netz als Eingangsgrößen zugeführt. Basierend hierauf prognostiziert das neuronale Netz zumindest eine Produkteigenschaft, wie zum Beispiel die Dichte oder die Stauchhärte.

Zum Training eines solchen neuronalen Netzes kann dabei eine Versuchsreihe gefahren werden, um eine zu prognostizierende Produkteigenschaft bei Variation der Eingangsgrößen zu messen. Aufgrund der so ermittelten Daten wird das neuronale Netz dann trainiert, das heißt es werden die tatsächlichen Parameter, Steighöhen, Zusammensetzung, Anlagen und / oder Umweltparameter in das neuronale Netz eingegeben. Die von dem neuronalen Netz prognostizierte Produkteigenschaft wird mit der tatsächlich gemessenen Produkteigenschaft verglichen. Aufgrund der Differenz zwischen der prognostizierten Produkteigenschaft und der tatsächlichen Produkteigenschaft erfolgt eine Anpassung der Gewichtung der Neuronen, das heißt ein Training des neuronalen Netzes.

Alternativ oder zusätzlich kann dieses Training des neuronalen Netzes auch während der laufenden Produktion erfolgen, das heißt es wird in diesem Fall keine Versuchsreihe gefahren, sondern es werden die Daten der Produktion über einen gewissen Zeitraum von z.B. einem Jahr gesammelt und für das Training des neuronalen Netzes verwendet.

Nach einer weiteren bevorzugten Ausführungsform der Erfindung dienen die prognostizierten Produkteigenschaften zur Klassifizierung der Güte des hergestellten Schaumstoffs. Beispielsweise werden die prognostizierten Güten in einer Datenbank abgelegt.

Nach einer weiteren bevorzugten Ausführungsform der Erfindung werden aufgrund der Prognose zumindest einer Produkteigenschaft Bereiche geringer Güte des hergestellten Schaumstoffs identifiziert. Solche Bereiche werden aus dem Schaumstoffblock ausgeschnitten. Im Vergleich zum Stand der Technik hat dies den Vorteil, dass weniger Ausschussmaterial produziert wird.

Beispielsweise werden in einer kontinuierlichen Blockschaumfertigung üblicherweise Blöcke von 6 m Länge aus dem Schaumstoffstrang geschnitten. Im Stand der Technik werden die einzelnen Blöcke dann im nachhinein einer Qualitätsprüfung unterzogen. Dagegen erlaubt es die Erfindung Bereiche des Schaumstoffstrangs, die als qualitativ minderwertig prognostiziert worden sind, aus dem Schaumstoffstrang auszuschneiden, so dass man Blöcke von zum Beispiel 6 m Länge einer einheitlichen prognostizierten Qualität erhält. Dabei ist auch eine Klassifizierung nach unterschiedlichen Qualitätsstufen möglich.

Im Weiteren werden bevorzugte Ausführungsformen der Erfindung mit Bezugnahme auf die Zeichnungen näher erläutert. Es zeigen:
- Figur 1: eine Prinzipdarstellung einer bevorzugten Ausführungsform der Erfindung bei einem Blockschaumprozess in einem kontinuierlichem Rechteck-Verfahren nach Hennecke,
- Figur 2: eine schematische Darstellung von Ist- und Soll-Steighöhen,
- Figur 3: ein Blockdiagramm einer Ausführungsform einer erfindungsgemäßen Anlage mit einem Regler und einem Computersystem zur Prognose von Produkteigenschaften,
- Figur 4: eine Ausführungsform eines neuronalen Netzes für das Computersystem der Figur 3,
- Figur 5: ein Flussdiagramm für den Betrieb der Anlage der Figuren 3 und 4,
- Figur 6: eine weitere Ausführungsform der Erfindung bei einem Blockschaumprozess in einem kontinuierlichem Maxfoam Rechteck-Verfahren.

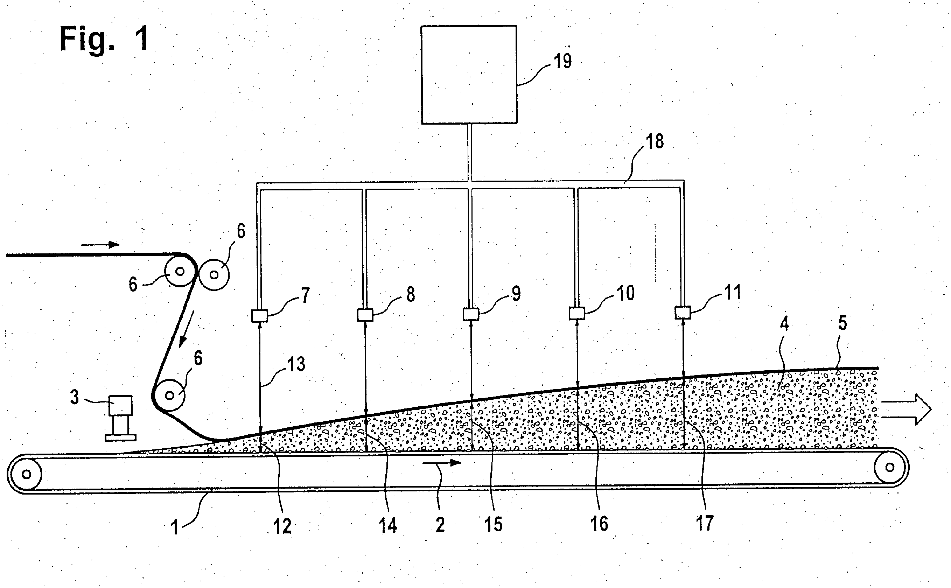

Die Figur 1 zeigt eine Anlage zur Herstellung von Schaumstoff, insbesondere von Polyurethan-Schaumstoff, in einem kontinuierlichem Blockschaumprozess nach einem Hennecke-Planibloc-Verfahren.

Die Anlage weist ein Transportband 1 auf, welches in der Förderrichtung 2 bewegt wird. Am Anfang des Transportbands 1 befindet sich oberhalb des Transportbands 1 ein Mischkopf 3. Der Mischkopf 3 dient zur Aufbringung eines reaktiven chemischen Systems auf die Oberfläche des Transportbands 1. Bei dem reaktiven chemischen System handelt es sich um ein schäumendes Gemisch, beispielsweise zur Herstellung von Polyurethan-Schaumstoff.

Das reaktive chemische Gemisch expandiert auf dem Transportband 1, so dass ein Expansionsbereich mit expandierendem Schaum 4 entsteht. Auf die Schaumoberfläche wird Abdeckpapier 5 aufgebracht, welches über Rollen 6 zugeführt wird.

Oberhalb des Expansionsbereichs sind Sensoren 7, 8, 9, 10 und 11 angeordnet. Beispielsweise dient der Sensor 7 dazu, die Steighöhe 12 des Schaumstoffs zu messen. Hierzu wird je nach dem verwendeten Sensorprinzip entweder die Steighöhe 12 unmittelbar oder mittelbar über den Abstand 13 zwischen dem Sensor 7 und der Oberfläche des expandierenden Schaums 4 bestimmt. Entsprechend werden mittels der Sensoren 8, 9, 10 und 11 die Steighöhen 14, 15, 16 bzw. 17 ermittelt.

Die Sensoren 7, 8, 9, 10 und 11 sind jeweils mit einem Bussystem 18 verbunden. Das Bussystem 18 ist mit einem Regler 19 verbunden. Über das Bussystem 18 erhält also der Regler 19 die Messsignale der Sensoren 7, 8, 9, 10 und 11. Aufgrund dieser Messsignale ermittelt der Regler 19 eine Stellgröße zur Nachregelung des Blockschaumprozesses. Beispielsweise dient als Stellgröße die Geschwindigkeit des Transportbands 1 und / oder die Pro-Zeiteinheit über den Mischkopf 3 zugeführte Menge des reaktiven chemischen Systems und / oder die chemische Zusammensetzung des Systems.

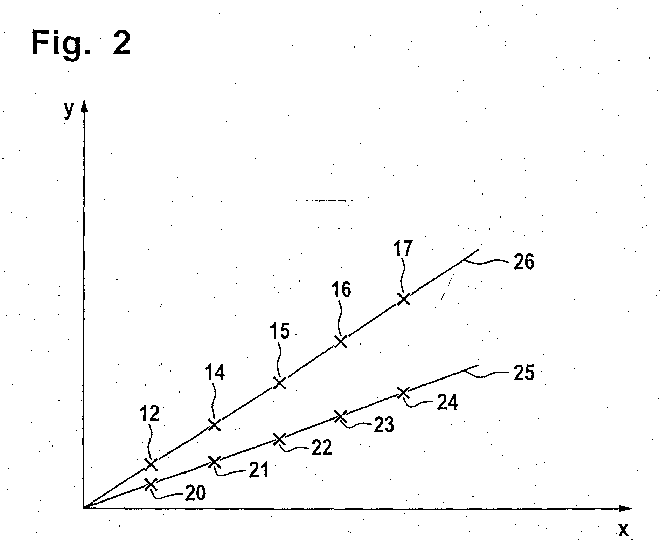

Die Figur 2 zeigt eine schematische Darstellung der ermittelten Ist-Steighöhen im Vergleich zu vorgegebenen Soll-Steighöhen welche z.B. in einer Anlage mit Fallbrett, z.B. MaxFoam, vorkommen können. Die Ist-Steighöhen 12, 14, 15, 16 und 17 sind in einem Koordinatensystem dargestellt. Die X-Achse entspricht dabei der Förderrichtung 2 und die Y-Achse der Steighöhe.

Ferner sind in dem Koordinatensystem die Soll-Steighöhen 20, 21, 22, 23 und 24 dargestellt. Anstelle diskreter Soll-Steighöhen kann auch eine Steigkontur in Form einer Kurve 25 vorgegeben sein.

Zur Durchführung der Regelung wird der Unterschied der Ist- und der Soll-Steighöhen ausgewertet. Dies kann beispielsweise so erfolgen, dass eine Ausgleichskurve 26 durch die messtechnisch ermittelten Ist-Steighöhen 12, 14, 15, 16 und 17 gelegt wird. Hierbei kann es sich um eine Ausgleichsgerade oder um ein Polynom, z. B. ein Spline-Polynom oder um Wavelets handeln.

Zur Bestimmung einer Stellgröße können beispielsweise die unterschiedlichen Steigungen der Kurven 25 und 26 herangezogen werden, das heißt es wird die Differenz zwischen der Steigung der Kurve 25 und der Steigung der Kurve 26 gebildet. Diese Differenz in der Steigung stellt ein Maß für die Abweichung der Ist-Steighöhen von den Soll-Steighöhen dar.

Alternativ oder zusätzlich kann zum Beispiel das Integral der Kurve 25 und das Integral der Kurve 26 gebildet werden. Die Differenz der beiden Integrale ergibt wiederum ein Maß für die Abweichung der Ist-Steighöhen von den Soll-Steighöhen.

Alternativ oder zusätzlich können auch charakteristische Punkte oder Wendepunkte der Ist- und Sollkurven für die Ermittlung einer Stellgröße verwendet werden. Typischerweise erhält man bei Anlagetypen ohne Fallbrett eine S-förmige Kurve mit einem weiteren Wendepunkt im Bereich des Abblasens des Schaumstoffs. Diese beiden Wendepunkte können für die Ermittlung der Stellgröße verwendet werden.

Aufgrund der Abweichung der Ist- von den Soll-Steighöhen wird also eine Stellgröße zur Nachregelung des Blockschaumprozesses ermittelt. In dem gezeigten Beispielsfall der Figur 2 kann etwa die Geschwindigkeit des Transportbands 1 (vgl. Figur 1) erhöht werden, um die Ist-Steighöhen an den Messpositionen der Sensoren 7, 8, 9, 10 und 11 entlang der Förderrichtung 2 zu reduzieren. Alternativ oder zusätzliche kann auch die pro Zeiteinheit von dem Mischkopf 3 aufgebrachte Menge des reaktiven chemischen Systems reduziert werden, um die Ist-Steighöhen zu verringern. Alternativ oder zusätzlich kann ferner die Zusammensetzung des reaktiven chemischen Systems so geändert werden, dass es langsamer aufschäumt, um so die Ist-Steighöhen an den Messpositionen zu verringern.

Ferner kann auch eine Neigung des Fallbretts der Anlage als Stellgröße verwendet werden. Liegt beispielsweise eine Ist-Steighöhe unter der Soll-Steighöhe, so werden ein oder mehrere Segmente des Fallbretts entsprechend nachgestellt, so dass beispielsweise die Neigung des Fallbretts verringert wird.

Ferner kann die Temperatur des dem Mischkopf zugeführten Materials als Stellgröße verwendet werden. Vorzugsweise sind hierzu in den Zulaufleitungen zu dem Mischkopf Durchlauferhitzer vorgesehen, um die Temperatur der dem Mischkopf zugeführten Komponenten zu regeln.

Ferner eignet sich auf der Abspritzdruck der Komponenten in den Mischkopf als Stellgröße. Bei dem Abspritzdruck handelt es sich um den Druck, mit dem die einzelnen Komponenten in den Mischkopf eingespritzt werden. Alternativ oder zusätzlich kann auch der in dem Mischkopf herrschende Druck als Stellgröße dienen. Die Regelung erfolgt zum Beispiel über eine an einem Auslass des Mischkopfs befindliche Drossel.

Als weitere Stellgröße kann die Drehzahl eines Mischers, der zur Vermischung der Komponenten dient, verwendet werden. Ein solcher Mischer oder Rührer ist zum Beispiel in dem Mischkopf angeordnet. Ein typischer Drehzahlbereich des Mischers ist 2000 bis 5000 Umdrehungen pro Minute.

Als weitere Stellgröße kommt die Menge des gelösten und / oder dispergierten Gases in den Komponenten in Frage.

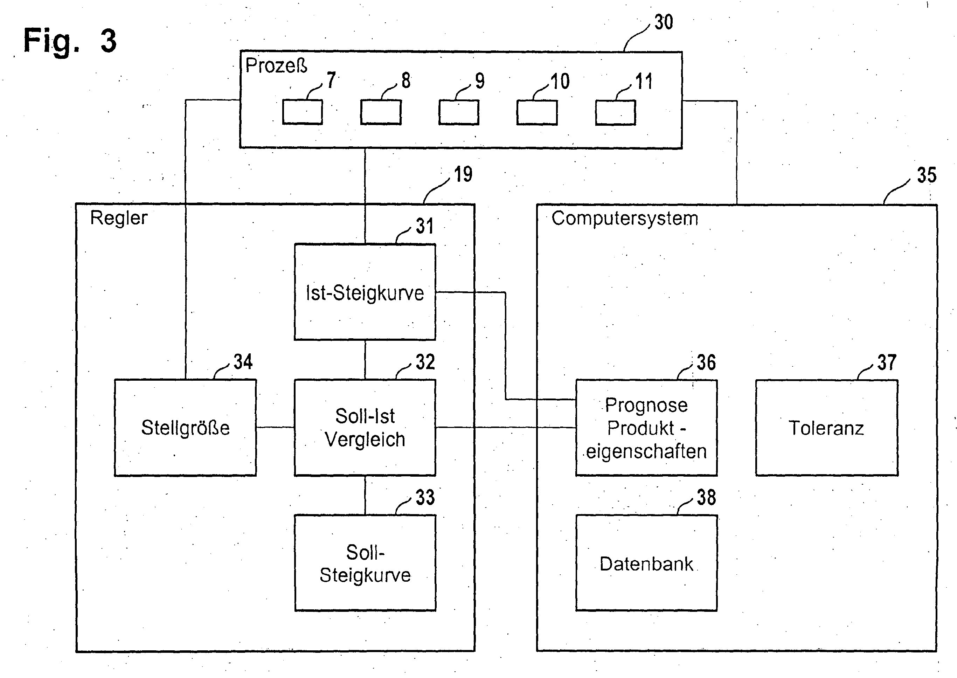

Die Figur 3 zeigt ein Blockdiagramm einer erfindungsgemäßen Anlage. Elemente der Figur 1, die Elementen der Figur 3 entsprechen, sind jeweils mit denselben Bezugszeichen gekennzeichnet.

In der Anlage erfolgt die Schaumstoffherstellung in einem kontinuierlichem Blockschaumprozess 30, zum Beispiel in einem kontinuierlichem Rechteck-Verfahren nach Hennecke oder nach Maxfoam. In der Anlage sind die Sensoren 7, 8, 9, 10 und 11 angeordnet, wie dies in der Figur 1 gezeigt ist.

Die Regelung des Prozesses 30 erfolgt über den Regler 19. Der Regler 19 beinhaltet ein Modul 31 zur Bestimmung der Ist-Steigkurve (vgl. Kurve 26 der Figur 2). Ferner beinhaltet der Regler 19 ein Modul 32 für den Vergleich, der in dem Modul 31 ermittelten Ist-Steigkurve mit einer in einem Modul 33 gespeicherten Soll-Steigkurve (vgl. Kurve 25 der Figur 2). In dem Modul 32 wird eine Maßzahl errechnet, die ein Maß für die Abweichung der Ist- von der Soll-Steigkurve angibt. Diese Maßzahl wird in das Modul 34 eingegeben, welches zur Ermittlung einer Stellgröße für die Nachregelung des Prozess 30 dient.

Die Anlage weist ferner ein Computersystem 35 auf mit einem Modul 36 zur Prognose von zumindest einer Produkteigenschaft des hergestellten Schaumstoffs, einer Tabelle 37 zur Klassifizierung der prognostizierten Güte des hergestellten Schaumstoffs sowie einer Datenbank 38. In der Datenbank 38 kann die Güte der prognostizierten Produktqualität in Längsrichtung des Blockschaums gespeichert werden, das heißt für eine bestimmte Stelle des Blockschaums in X-Richtung wird die prognostizierte Produktqualität in der Datenbank 38 abgespeichert.

Das Computersystem 35 erhält als Eingangsgröße die von dem Modul 31 bestimmte Ist-Steigkurve, welche in das Modul 36 eingegeben wird. Alternativ werden nur die gemessenen Ist-Steighöhen eingegeben. Ferner kann auch die in dem Modul 32 ermittelte Maßzahl, welche das Maß der Abweichung zwischen der Ist- und der Soll-Steigkurve angibt, in das Computersystem 35 eingegeben werden.

Aufgrund dieser Eingabewerte werden in dem Modul 36 eine oder mehrere Produkteigenschaften des aktuell hergestellten Schaumstoffs prognostiziert. Bei den prognostizierten Produkteigenschaften kann es sich zum Beispiel um die Dichte und um die Stauchhärte handeln.

Mittels der prognostizierten Produkteigenschaften erfolgt dann eine Klassifizierung der Güte durch einen Zugriff auf die Tabelle 37. In der Tabelle 37 sind zulässige Toleranzwerte für die Produkteigenschaften je nach Produktgüte gespeichert.

Die prognostizierten Produkteigenschaften und die zugeordneten Güten werden dann in der Datenbank 38 für den aktuell hergestellten Schaumstoff abgelegt.

Üblicherweise wird der aus dem Prozess 30 resultierende kontinuierliche Blockschaum in Blöcke von zum Beispiel 6 m Länge unterteilt. Hierzu beinhaltet der Prozess 30 eine Schneidvorrichtung. Vorzugsweise wird diese Schneidvorrichtung von dem Computersystem 35 angesteuert. Wenn das Computersystem 35 einen kürzeren Abschnitt des Blockschaums mit einer geringeren Güte prognostiziert, so wird dieser durch Ansteuerung der Schneidvorrichtung in dem Prozess 30 aus dem Blockschaum herausgeschnitten. Auf diese Art und Weise lässt sich der Ausschuss des Prozess 30 reduzieren.

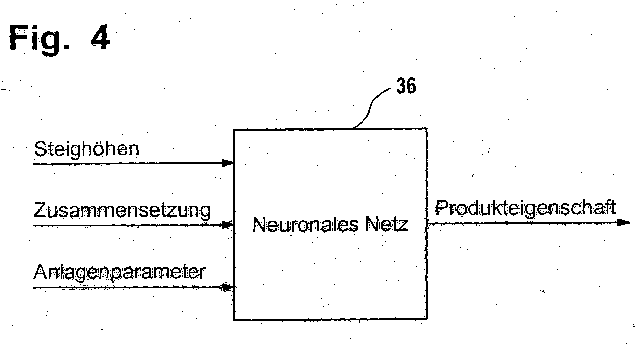

Die Figur 4 zeigt eine Ausführungsform des Prognosemoduls 36 der Figur 3. Bei dieser Ausführungsform handelt es sich um ein neuronales Netz. Die Eingangsgrößen des neuronalen Netzes sind die Ist-Steighöhen (vgl. die Steighöhen 12, 14, 15, 16, 17 der Figur 1 und 2), die Zusammensetzung des reaktiven chemischen Systems, welches durch den Mischkopf 3 auf das Transportband 1 aufgebracht wird (vgl. Figur 1) sowie Anlagenparameter, wie zum Beispiel Drücke und Temperaturen und vorzugsweise auch Umweltparameter, wie zum Beispiel der Atmosphärendruck und die Luftfeuchtigkeit.

Aus diesen Eingangsgrößen prognostiziert das neuronale Netz eine oder mehrere Produkteigenschaften.

Die zum Training des neuronalen Netzes erforderlichen Trainingsdaten können durch separate Versuchsreihen oder durch Aufnahme von Daten einer aktuellen Produktion gewonnen werden.

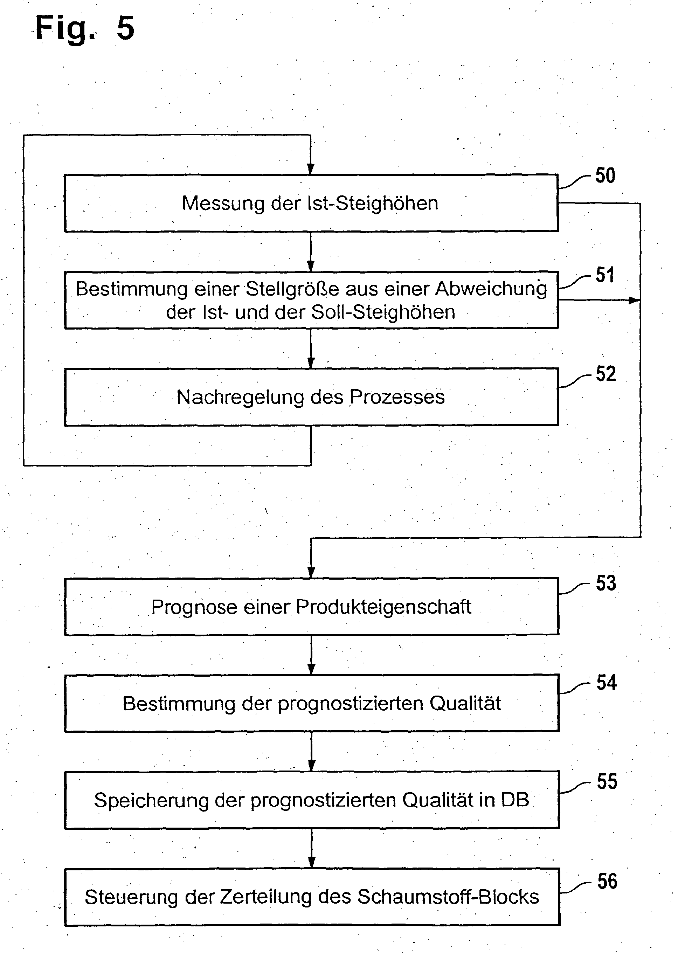

Die Figur 5 veranschaulicht das erfindungsgemäße Verfahren mittels eines Flussdiagramms. In dem Schritt 50 erfolgt zunächst die Messung der Ist-Steighöhen in einem Expansionsbereich des Schaumstoffs in dem Blockschaumprozess. In dem Schritt 51 wird eine Stellgröße für die Nachregelung des Blockschaumprozesses aus einer Abweichung der Ist- und der Soll-Steighöhen ermittelt. In dem Schritt 52 wird der Prozess entsprechend nachgeregelt. Danach erfolgt in dem Schritt 50 erneut eine Messung der Ist-Steighöhen für die fortlaufende Regelung des Blockschaumprozesses.

Aus den Ist-Steighöhen und / oder aus der Stellgröße wird in dem Schritt 53 eine Produkteigenschaft prognostiziert. Aus der oder den prognostizierten Produkteigenschaften wird in dem Schritt 54 eine Qualitätsklasse prognostiziert. Diese wird in dem Schritt 55 in einer Datenbank gespeichert. In dem Schritt 56 wird die Zerteilung des Blockschaums in Abhängigkeit von der prognostizierten Qualität gesteuert, so dass man zum Beispiel Abschnitte des Blockschaums mit geringerer Qualität herausschneidet, um große zusammenhängende Blöcke hoher Qualität zu erreichen.

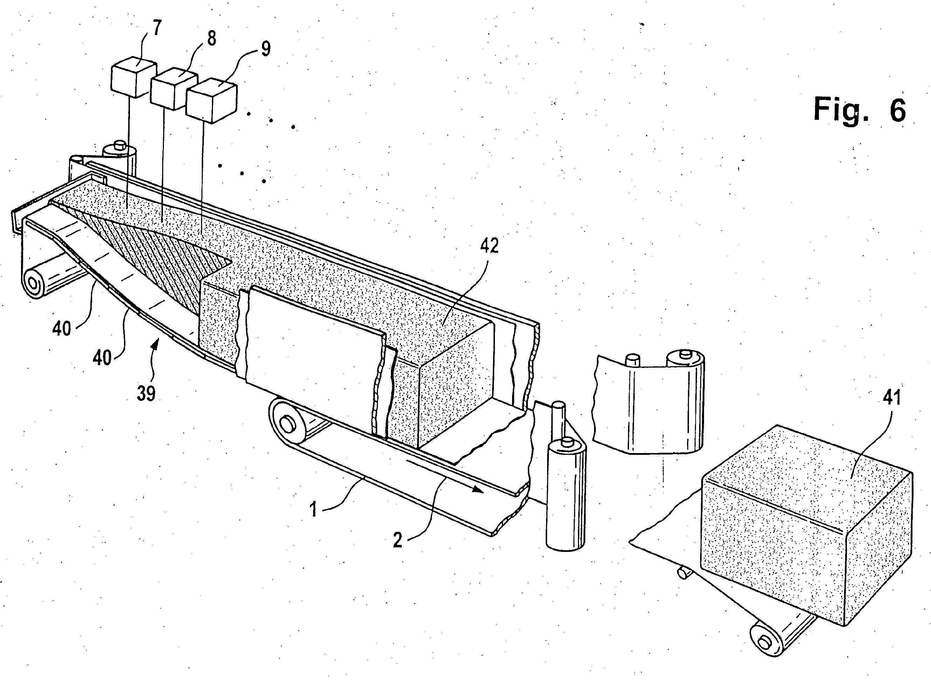

Die Figur 6 zeigt eine alternative Ausführungsform der Erfindung bei einer Anlage, die nach einem Maxfoam-Verfahren arbeitet. Elemente der Figur 6, die Elementen der Figur 1 entsprechen, sind mit denselben Bezugszeichen gekennzeichnet.

Im Unterschied zu der Ausführungsform der Figur 1 ist dem Transportband 1 in der Ausführungsform der Figur 6 der Expansionsbereich in Form eines Fallbretts 39 vorgelagert. Das Fallbrett ist in Segmente 40 unterteilt, die so eingestellt sind, dass sie näherungsweise die Kontur des expandierenden Schaums 4 nachbilden. Die Oberseite des expandierenden Schaums ist daher näherungsweise eben.

Die Oberfläche des expandierenden Schaums 4 wird in dem Expansionsbereich von den Sensoren 7, 8, 9, ... abgetastet, um die jeweiligen Ist- Steighöhen zu ermitteln. Diese sollen möglichst gleich Null sein, da die Expansion ja nach unten hin in die durch das Fallbrett 39 beschriebene Kontur erfolgt. Die Regelung erfolgt also in diesem Ausführungsbeispiel so, dass die von den Sensoren 7, 8, 9 .... erfasste Oberfläche des expandierenden Schaums möglichst plan ist.

Ferner ist in der Figur 6 ein aus dem Blockschaum geschnittener Schaumstoffblock 41 dargestellt, der durch Zerteilen des Blockschaums 42 gewonnen wird.

### Bezugszeichenliste

- Transportband: 1
- Förderrichtung: 2
- Mischkopf: 3
- Expandierender Schaum: 4
- Abdeckpapier: 5
- Rollen: 6
- Sensor: 7
- Sensor: 8
- Sensor: 9
- Sensor: 10
- Sensor: 11
- Steighöhe: 12
- Abstand: 13
- Steighöhe: 14
- Steighöhe: 15
- Steighöhe: 16
- Steighöhe: 17
- Bussystem: 18
- Regler: 19
- Soll-Steighöhe: 20
- Soll-Steighöhe: 21
- Soll-Steighöhe: 22
- Soll-Steighöhe: 23
- Soll-Steighöhe: 24
- Kurve: 25
- Kurve: 26
- Prozess: 30
- Modul: 31
- Modul: 32
- Modul: 33
- Modul: 34
- Computersystem: 35
- Modul: 36
- Tabelle: 37
- Datenbank: 38
- Fallbrett: 39
- Segment: 40
- Schaumstoffblock: 41
- Blockschaum: 42

## Patentansprüche

1. Verfahren zur Herstellung von Schaumstoff, insbesondere von Polyurethan-Weichschaum, in einem kontinuierlichem Blockschaumprozess mit folgenden Schritten:
- Erfassung von Ist-Steighöhen des Schaumstoffs entlang einer Förderrichtung,
- Bestimmung einer Stellgröße für den Blockschaumprozess in Abhängigkeit von einer Abweichung der Ist-Steighöhen von Soll-Steighöhen.

2. Verfahren nach Anspruch 1, wobei es sich bei dem Schaumstoff um Polyurethan-Schaumstoff handelt.

3. Anlage zur Herstellung von Schaumstoff, insbesondere von Polyurethan-Weichschaum, in einem kontinuierlichem Blockschaumprozess mit
- Mitteln (7, 8, 9, 10, 11 ) zur Erfassung von Ist-Steighöhen des Schaumstoffs entlang einer Förderrichtung,
- Mitteln (19) zur Bestimmung einer Stellgröße für den Blockschaumprozess in Abhängigkeit von einer Abweichung der Ist-Steighöhen von vorgegebenen Soll-Steighöhen.
